(19) Europäisches Patentamt
European Patent Office
Office européen des brevets

(11) EP 3 604 957 A1

(12) EUROPEAN PATENT APPLICATION
published in accordance with Art. 153(4) EPC

(43) Date of publication:
05.02.2020 Bulletin 2020/06

(51) Int Cl.:
F24F 11/64 (2018.01)          A01G 9/24 (2006.01)
A01G 9/26 (2006.01)          G01W 1/10 (2006.01)
G06Q 50/02 (2012.01)

(21) Application number: 18775427.0

(22) Date of filing: 05.03.2018

(86) International application number:
PCT/JP2018/008282

(87) International publication number:
WO 2018/180239 (04.10.2018 Gazette 2018/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2017 JP 2017060620

(71) Applicant: Bosch Corporation
Tokyo 150-8360 (JP)

(72) Inventors:
• ITO Satoshi
Tokyo 150-8360 (JP)
• JAIN Mausam
Tokyo 150-8360 (JP)

(74) Representative: Bee, Joachim
Robert Bosch GmbH, C/IPE
P.O. Box 30 02 20
70442 Stuttgart (DE)

(54) INFORMATION PROCESSING DEVICE AND INFORMATION PROCESSING METHOD

(57) The precision of a prediction about the future environment inside a greenhouse is improved with the cost of installation, maintenance, and the like of a sensor being reduced. An information processing device including: a predicting unit that predicts the environment inside a greenhouse based on weather prediction information by using a greenhouse inside-environment prediction model which is obtained by machine learning that is performed based on actual result information on the environment inside the greenhouse by using weather observation information as input; and an output control unit that controls output of prediction information on the predicted environment inside the greenhouse is provided.

[FIG. 1]

**Description**

Technical Field

The present invention relates to information processing devices and information processing methods.

Background Art

In greenhouse horticulture, techniques of predicting the environment inside a greenhouse and controlling the environment inside the greenhouse based on the prediction results have been developed in recent years. By predicting the environment inside a greenhouse in advance and controlling the environment inside the greenhouse by using the prediction results as described above, it is possible to grasp future crop yields and risk of disease in advance and avoid the risk of disease and prevent a reduction in crop yields.

For example, in PTL 1, the technique of selecting an optimum operation pattern which makes the temperature reach a target temperature by a simulation based on combinations of operation patterns of a plurality of heaters which are provided inside a greenhouse and controlling the heaters based on the selected optimum operation pattern is disclosed.

Moreover, in PTL 2 and PTL 3, the techniques of controlling equipment, such as heating, which adjusts the environment inside a greenhouse based on information that is input from an outside air temperature sensor, a sunlight sensor, or the like are disclosed.

Citation List

Patent Literature

PTL 1: JP-A-2012-57931
PTL 2: JP-A-2002-48354
PTL 3: JP-A-5-227661

Summary of Invention

Technical Problem

However, in the inventions disclosed in the above-described patent literatures, an environment sensor such as an outside air temperature sensor, a sunlight sensor, or the like has to be appropriately installed around the greenhouse. This undesirably involves the introduction cost and the maintenance cost of the environment sensor.

The present invention has been made in view of the above-described problem and an object of the present invention is accordingly to provide novel and improved information processing device and information processing method, which can improve the precision of a prediction about the future environment inside a greenhouse while reducing costs.

Solution to Problem

To solve the above-described problem, according to an aspect of the present invention, an information processing device including: a predicting unit that predicts the environment inside a greenhouse based on weather prediction information by using a greenhouse inside-environment prediction model which is obtained by machine learning that is performed based on actual result information on the environment inside the greenhouse by using weather observation information as input; and an output control unit that controls output of prediction information on the predicted environment inside the greenhouse is provided.

Information which is input to the greenhouse inside-environment prediction model may include information on a time at which a prediction about the weather is to be made.

The information on the time at which a prediction about the weather is to be made may include information on a time period to which the time at which a prediction about the weather is to be made belongs.

The information on the time at which a prediction about the weather is to be made may include information on a month to which the time at which a prediction about the weather is to be made belongs.

Information which is input to the greenhouse inside-environment prediction model may include identification information for identification of the greenhouse.

Information which is input to the greenhouse inside-environment prediction model may include information on environment control equipment that can control the environment inside the greenhouse.

The information on the environment control equipment may include information on the presence or absence of installation of the environment control equipment.

The information on the environment control equipment may include information indicating operation conditions of the environment control equipment.

The weather prediction information may include information on at least one of the air temperature outside the greenhouse, the relative humidity outside the greenhouse, the amount of solar radiation, and the amount of rainfall.

The information processing device may further include a machine learning unit that performs machine learning for the greenhouse inside-environment prediction model based on the actual result information on the environment inside the greenhouse by using the weather observation information as input.

The machine learning unit may update the greenhouse inside-environment prediction model based on the prediction information on the environment inside the greenhouse and the actual result information on the environment inside the greenhouse at a time at which a prediction is to be made, which corresponds to the prediction information on the environment inside the greenhouse.

The prediction information on the environment inside the greenhouse may include information on at least one of the air temperature inside the greenhouse and the relative humidity inside the greenhouse.

Moreover, to solve the above-described problem, according to another aspect of the present invention, an information processing method including: a prediction step of predicting the environment inside a greenhouse based on weather prediction information by using a greenhouse inside-environment prediction model which is obtained by machine learning that is performed based on actual result information on the environment inside the greenhouse by using weather observation information as input; and an output control step of controlling output of prediction information on the predicted environment inside the greenhouse is provided.

Advantageous Effects of Invention

As described above, according to the present invention, it is possible to improve the precision of a prediction about the future environment inside a greenhouse while reducing costs.

Brief Description of Drawings

Fig. 1 is a diagram for explaining the general outline of an information processing system according to an embodiment of the present invention.

Fig. 2 is a block diagram depicting an example of the schematic functional configuration of the information processing system according to the embodiment.

Fig. 3 is a diagram conceptually showing an example of the flow of overall processing in machine learning processing, which is performed by the information processing system according to the embodiment.

Fig. 4 is a flowchart conceptually showing an example of the machine learning processing which is performed by an information processing server according to the embodiment.

Fig. 5 is a diagram conceptually showing an example of the flow of overall processing in prediction processing, which is performed by the information processing system according to the embodiment.

Fig. 6 is a flowchart conceptually showing an example of the prediction processing which is performed by the information processing server according to the embodiment.

Fig. 7 is a block diagram depicting a hardware configuration example of the information processing server according to the embodiment.

Description of Embodiments

Hereinafter, a preferred embodiment of the present invention will be described in detail with reference to the accompanying drawings. In the description and the drawings, constituent elements having substantially the same functional configuration will be identified with the same reference sign and overlapping explanations will be omitted.

<<1. General outline>>

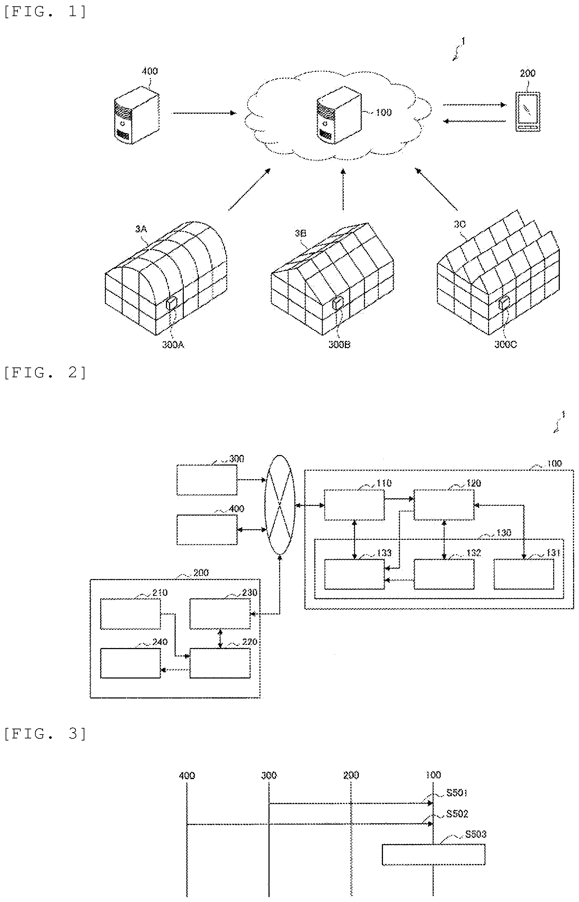

First, the general outline of an information processing system 1 according to an embodiment of the present invention will be described with reference to Fig. 1. Fig. 1 is a diagram for explaining the general outline of the information processing system 1 according to the embodiment of the present invention.

The information processing system 1 has a collection function of collecting, for example, weather information and information on the environment inside a greenhouse and a prediction function of predicting the environment inside the greenhouse based on the collected information. Moreover, the information processing system 1 may have a presentation function of presenting prediction information which is obtained by the prediction function.

Specifically, the information processing system 1 includes an information processing server 100 having an information collection function and an information distribution function, an information processing terminal 200 having an information browsing function, and measurement control devices 300 (300A to 300C) which are individually provided for greenhouses 3 (3A to 3C) and have an observation function and an observation information distribution function.

For example, the information processing server 100 collects weather information (including weather prediction information) from a weather information server 400. The weather prediction information here means future weather information yet to be observed, such as a weather forecast. Then, the information processing server 100 inputs the collected weather information to a greenhouse inside-environment prediction model. Next, the information processing server 100 outputs prediction information on the future environment inside the greenhouse 3, which is output from the greenhouse inside-environment prediction model, and distributes the prediction information to the information processing terminal 200.

Furthermore, the information processing server 100 uses the greenhouse inside-environment prediction model obtained by machine learning. Such machine learning is performed based on actual result information on the environment inside the greenhouse by using at least weather observation information as input. The weather observation information here means weather information observed in the past, such as the past weather.

For instance, the information processing server 100 may have a machine learning function. Specifically, the information processing server 100 acquires the actual result information on the environment inside the greenhouse from the measurement control device 300. Moreover, the information processing server 100 acquires the weather observation information from the weather information server 400. Then, the information processing server 100 performs machine learning for the greenhouse inside-environment prediction model based on the weather observation information and the actual result information on the environment inside the greenhouse.

As described above, by using the greenhouse inside-environment prediction model obtained by machine learning, it is possible to predict the future environment inside the greenhouse by using only the weather prediction information as input. Therefore, it is possible to improve the environment inside the greenhouse the precision of a prediction while reducing costs without the need for the installation and maintenance of an environment sensor or the like.

The above-described functions of the information processing server 100 may be implemented by a plurality of devices. For example, the above-described functions of the information processing server 100 may be implemented by cloud computing including a plurality of devices. Moreover, in Fig. 1, an example in which the information processing terminal 200 is a portable information terminal such as a smartphone is explained; the information processing terminal 200 may be an information communication device such as a stationary personal computer.

<<2. Embodiment of the present invention>>

The above is an explanation of the general outline of the information processing system 1 according to the embodiment of the present invention. Next, the details of the information processing system 1 according to the embodiment of the present invention will be described.

<2.1. Configuration of the system>

First, the functional configuration of the information processing system 1 will be described with reference to Fig. 2. Fig. 2 is a block diagram depicting an example of the schematic functional configuration of the information processing system 1 according to the embodiment of the present invention.

As depicted in Fig. 2, the information processing system 1 includes the information processing server 100, the information processing terminal 200, and the measurement control device 300. The information processing server 100, the information processing terminal 200, the measurement control device 300, and the weather information server 400, which will be described later, are connected via a communication network. These devices are connected via a wide area network (WAN) such as the Internet, for example.

(Information processing server)

The information processing server 100 operates as an information processing device and includes a communication unit 110, a storing unit 120, and a control unit 130.

(Communication unit)

The communication unit 110 communicates with the information processing terminal 200, the measurement control device 300, and the weather information server 400. Specifically, the communication unit 110 receives actual result information on the environment inside the greenhouse from the measurement control device 300 and receives the weather information from the weather information server 400. Moreover, the communication unit 110 transmits information which is output from an output control unit 133. For instance, the communication unit 110 can transmit the prediction information on the environment inside the greenhouse 3 to the information processing terminal 200 or the measurement control device 300.

The communication unit 110 is implemented by, for example, a communication interface for connection with a network or the like.

(Storing unit)

The storing unit 120 stores information on processing which is performed by the control unit 130. Specifically, the storing unit 120 stores the information (for example, the actual result information on the environment inside the greenhouse 3, the weather information, and the like) received by the communication unit 110. Moreover, the storing unit 120 stores the greenhouse inside-environment prediction model.

The storing unit 120 is implemented by, for example, a storage device for data storage or the like.

(Control unit)

The control unit 130 performs overall control of the operation of the information processing server 100. Specifically, as depicted in Fig. 2, the control unit 130 includes a machine learning unit 131, a predicting unit 132, and the output control unit 133 and has the function of controlling processing for a prediction about the environment inside the greenhouse 3. The control unit 130 is implemented by, for example, an arithmetic processing unit which is configured with a central processing unit (CPU), read only memory (ROM), and random access memory (RAM), a control device, and so forth.

(Machine learning unit)

The machine learning unit 131 performs machine learning for the greenhouse inside-environment prediction model. Specifically, the machine learning unit 131 performs machine learning for the greenhouse inside-environment prediction model based on the actual result information on the environment inside the greenhouse 3 and the weather observation information corresponding to the actual result information, which are stored in the storing unit 120.

Specifically, the machine learning unit 131 acquires, from the storing unit 120, the actual result information on the environment inside the greenhouse 3 in a predetermined past period and the weather observation information in this predetermined period. Then, the machine learning unit 131 performs machine learning for the greenhouse inside-environment prediction model by using teacher data using the weather observation information as input and the actual result information on the environment inside the greenhouse 3 as output. The greenhouse inside-environment prediction model after machine learning is stored in the storing unit 120.

Examples of the weather observation information which is input to the greenhouse inside-environment prediction model include, for instance, the actual measurement values of the air temperature, the relative humidity, the amount of solar radiation, and the amount of rainfall outside the greenhouse 3. Moreover, examples of the actual result information on the environment inside the greenhouse 3 include, for instance, the actual measurement values of the air temperature and relative humidity inside the greenhouse. In addition to those described above, examples of the actual result information on the environment inside the greenhouse 3 include the actual measurement value indicating, for example, the concentration of carbon dioxide or the amount of soil water inside the greenhouse 3.

Furthermore, in addition to the above-mentioned weather observation information, as the information which is input to the greenhouse inside-environment prediction model, information on a weather observation time (a time at which observations are to be made), for example, may be used. For instance, when a time at which observations are to be made is 7 a.m., information indicating "7 a.m." can be input to the greenhouse inside-environment prediction model. Moreover, the information on a time at which observations are to be made may be information on a time period to which the time at which observations are to be made belongs. For example, when the time period is set in increments of 1 hour, if the observation time is 9:20 p.m., information indicating "21-22 (between 9 p.m. and 10 p.m.)" can be input to the greenhouse inside-environment prediction model as information on this time period.

Unlike a factory, in the greenhouse 3, the environment such as the weather, such as the temperature or humidity not only outside the greenhouse 3 but also inside the greenhouse 3, can change greatly in the course of a day depending on the presence or absence of solar radiation and changes in temperature between the morning and the evening. Thus, as a result of information on a time such as a time period being used as the information which is input to the greenhouse inside-environment prediction model, consideration can be given to time series variations in the environment inside the greenhouse 3. Therefore, it is possible to improve the precision of a prediction about the environment inside the greenhouse 3.

Moreover, the information on a time at which observations of the weather are to be made may be information on a month to which the time at which observations of the weather are to be made belongs. The environment inside the greenhouse 3 can vary greatly not only in the course of a day, but also depending on the season of the year. Thus, when information about a month to which the time at which observations are to be made belongs is used as the information to be input to the greenhouse inside-environment prediction model, consideration can be given to time series variations in the environment inside the greenhouse 3 in a longer span of time. Therefore, it is possible to improve the precision of a prediction about the environment inside the greenhouse 3.

Furthermore, as the information which is input to the greenhouse inside-environment prediction model, identification information for identification of the greenhouse 3, for instance, may be used. The environment inside the greenhouse can differ greatly among a plurality of greenhouses 3 depending on the structure of the greenhouse 3, the presence or absence and performance of control equipment which is provided in the greenhouse 3 and controls the environment inside the greenhouse, or a difference in the installation position of the greenhouse 3. Thus, as a result of the identification information for identification of the greenhouse 3 being used as the information which is input to the greenhouse inside-environment prediction model, it is possible to construct a suitable greenhouse inside-environment prediction model for each greenhouse 3.

Such a greenhouse inside-environment prediction model may be independently constructed for each greenhouse 3. On the other hand, when, for example, a plurality of greenhouses 3 are densely built in a predetermined region, the environment such as the weather outside the greenhouse in this predetermined region is often uniform. Thus, by using the identification information for identification of the greenhouse 3 as the information which is input to the greenhouse inside-environment prediction model, it is possible to predict the environments inside the greenhouses 3 with sufficiently high accuracy by just constructing one common greenhouse inside-environment prediction model.

Moreover, as the information which is input to the greenhouse inside-environment prediction model, information on environment control equipment that can control the environment inside the greenhouse 3, for example, may be used. The environment control equipment is, for instance, heating equipment that controls the temperature inside the greenhouse, a light-blocking curtain that adjusts the amount of solar radiation going into the inside of the greenhouse, or the like.

The information on the environment control equipment includes, for example, information on the presence or absence of installation of the environment control equipment. The pattern of change in the environment inside the greenhouse (for example, a change in temperature) can change depending on whether or not the environment control equipment is installed inside the greenhouse. Thus, by using the information on the presence or absence of installation of the environment control equipment as the information which is input to the greenhouse inside-environment prediction model, consideration can be given to the influence of control of the environment inside the greenhouse on a change in the environment inside the greenhouse. Therefore, it is possible to improve the precision of a prediction about the environment inside the greenhouse 3.

Furthermore, the information on the environment control equipment includes, for example, information indicating the operation conditions of the environment control equipment. When the environment control equipment is installed inside the greenhouse, the pattern of change in the environment inside the greenhouse can change depending on the operation conditions of the environment control equipment (for instance, the operating or stopped state or the control conditions of the environment control equipment in operation). Thus, by using the information indicating the operation conditions of the environment control equipment as the information which is input to the greenhouse inside-environment prediction model, consideration can be given to the influence of the operation conditions on a change in the environment inside the greenhouse. Therefore, it is possible to improve the precision of a prediction about the environment inside the greenhouse 3.

The identification information for identification of the greenhouse 3 and the information on the environment control equipment can be acquired as appropriate from the measurement control device 300 which is installed in each greenhouse 3, for example.

In the description, the weather observation (prediction) information, the information on a time, the information for identification of the greenhouse 3, the information on the environment control equipment, and the like will also be referred to as input information. These input information may be quantitative data or qualitative data. Moreover, these input information may be continuous data or discrete data, each fitting into one of a plurality of categories.

For example, prediction formulae for the air temperature and relative humidity inside the greenhouse 3 in the greenhouse inside-environment prediction model may be expressed as the following Formulae (1) and (2).

$$T_{in} = A_1 \times T_{out}^3 + A_2 \times S + Z_1(t) \quad \ldots \quad (1)$$

$$H_{in} = B_1 \times A_{out} + B_2 \times S + Z_2(t) + M(t) \quad \ldots \quad (2)$$

Here, the variables are defined as follows.

$T_{in}$: the predicted value of the air temperature inside the greenhouse 3
$T_{out}$: the predicted value of the air temperature outside the greenhouse 3
S: the predicted value of the amount of solar radiation outside the greenhouse 3
$Z_1(t)$, $Z_2(t)$: variables, each corresponding to a time period to which a time at which a prediction is to be made belongs
$H_{in}$: the predicted value of the relative humidity inside the greenhouse 3
$H_{out}$: the predicted value of the relative humidity outside the greenhouse 3
M(t) : a variable corresponding to a month to which a time at which a prediction is to be made belongs

Moreover, the coefficients $A_1$, $A_2$, $B_1$, and $B_2$ and the variables $Z_1(t)$, $Z_2(t)$, and M(t) are calculated by performing, for example, machine learning which will be described later.

The machine learning unit 131 can construct the greenhouse inside-environment prediction model by using a publicly known machine learning model. The above-described machine learning model may be any model, which can be used for machine learning for the greenhouse inside-environment prediction model, of the existing machine learning models. For instance, the machine learning model may be a calculation model using linear regression, a filter such as the Kalman filter, a support vector machine, random forests, the nearest neighbor algorithm, a neural network such as deep learning, a Bayesian network, or the like.

Furthermore, the machine learning unit 131 may update the greenhouse inside-environment prediction model based on the prediction information which is obtained by the predicting unit 132, which will be described later, and the actual result information on the environment inside the greenhouse 3 at a time at which a prediction is to be made, which corresponds to the prediction information. This makes it possible to automatically modify the greenhouse inside-environment prediction model in accordance with the degree of divergence between the prediction information and the actual result information. As a result, it is possible to maintain a high degree of accuracy of a prediction about the environment inside the greenhouse.

Specifically, by performing machine learning as appropriate by using the successively obtained weather observation information and the like as input data and the successively obtained actual result information on the environment inside the greenhouse 3 as teacher data, the machine learning unit 131 can automatically optimize the coefficients and the like of the greenhouse inside-environment prediction model. By successively updating the greenhouse inside-environment prediction model by using machine learning, it is possible to provide more accurate prediction information on the environment inside the greenhouse 3, even when it is a greenhouse into which the prediction system was newly introduced, in a shorter period of time than a prediction made based only on the past actual result information obtained by a linear model or the like.

In an update of the greenhouse inside-environment prediction model by machine learning, the following advantages are obtained depending on the technique which is used in machine learning. For example, the Kalman filter can regularly adjust the coefficients that make up the greenhouse inside-environment prediction model with consideration given to a difference between the predicted values in the prediction information and the measured values in the actual result information. This makes it possible to respond to daily or seasonal changes. Moreover, for instance, the neural network can easily respond also to nonlinear variations (for example, change of settings of a greenhouse environment control device such as a heater) about which a prediction is not easily made by the linear model or Kalman filter. The combined use of these techniques for machine learning may be adopted.

(Predicting unit)

The predicting unit 132 predicts the environment inside the greenhouse 3 from the weather prediction information by using the greenhouse inside-environment prediction model. Specifically, based on the greenhouse inside-environment prediction model stored in the storing unit 120 and the weather prediction information acquired from the weather information server 400, the predicting unit 132 predicts the environment inside the greenhouse 3 at a time or in a period, which corresponds to the weather prediction information, and generates the prediction information.

Specifically, the predicting unit 132 acquires, from the storing unit 120, the weather prediction information at a predetermined present or future point in time or in a predetermined present or future period and the greenhouse inside-environment prediction model already constructed by the machine learning unit 131. Then, the predicting unit 132 inputs the weather prediction information to the greenhouse inside-environment prediction model and generates the prediction information on the environment inside the greenhouse 3 at the above-mentioned predetermined point in time or in the above-mentioned predetermined period from this greenhouse inside-environment prediction model. This prediction information is stored in the storing unit 120.

As in the case of the weather observation information, examples of the weather prediction information which is input to the greenhouse inside-environment prediction model include, for instance, the actual measurement values of the air temperature, the relative humidity, the amount of solar radiation, and the amount of rainfall outside the greenhouse 3. Furthermore, the information used in machine learning performed by the machine learning unit 131 may also be used as the information which is input to the greenhouse inside-environment prediction model also in prediction processing which is performed by the predicting unit 132. For example, the information on a time (including a time period and a month) at which a prediction about the weather is to be made, the identification information for identification of the greenhouse 3, or the information on the environment control equipment may be used. The combined use of these information with the weather prediction information makes it possible to further improve the accuracy of the prediction information.

Moreover, as in the case of the actual result information, examples of the prediction information on the environment inside the greenhouse 3 include, for instance, the predicted values of the air temperature and relative humidity inside the greenhouse 3. In addition to those described above, examples of the prediction information on the environment inside the greenhouse 3 include the predicted value indicating, for example, the concentration of carbon dioxide or the amount of soil water inside the greenhouse 3.

(Output control unit)

The output control unit 133 has the function of controlling output of the prediction information generated by the predicting unit 132.

For example, the output control unit 133 can generate display information on the prediction information. This display information includes, for instance, the results (for example, the predicted values of the air temperature, relative humidity, and the like inside the greenhouse 3) of a prediction about the environment inside the greenhouse 3 at a time (including a period) at which a prediction is to be made by the predicting unit 132. More specifically, when provision request information is received by the communication unit 110, the output control unit 133 acquires the prediction information at a time or in a period which is identified from the provision request information. Then, the output control unit 133 can generate the display information by processing the acquired prediction information and output the generated display information to the communication unit 110. Moreover, the output control unit 133 may output the acquired prediction information to the communication unit 110 without processing the prediction information into the display information.

A mode of output of the prediction information whose output is controlled by the output control unit 133 is not limited to a particular mode. For example, the output control unit 133 may perform control so as to output the prediction information in various modes such as text, voice, vibration caused by vibrations, and light emission.

(Information processing terminal)

As depicted in Fig. 2, the information processing terminal 200 includes an operation entry unit 210, a control unit 220, a communication unit 230, and a displaying unit 240.

(Operation entry unit)

The operation entry unit 210 has the function of accepting an operation which is performed on the information processing terminal 200. Specifically, the operation entry unit 210 accepts an entered operation and generates various kinds of information in accordance with the accepted operation. The generated various kinds of information are output to the control unit 220. Here, the various kinds of information which are generated by the operation entry unit 210 are, for example, the provision request information or equipment operation information. The provision request information is information indicating a request made to the information processing server 100 to provide the display information. Moreover, the equipment operation information is information indicating the details of an operation of the environment control equipment of the greenhouse 3, which is performed by the measurement control device 300. For instance, an entry screen is displayed by the displaying unit 240 and the user operates the entry screen, whereby the above-described various kinds of information are generated.

The operation entry unit 210 is implemented by, for example, a button, a keyboard, a touch panel, or the like.

(Control unit)

The control unit 220 performs overall control of the operation of the information processing terminal 200. Specifically, the control unit 220 controls the operation of the communication unit 230 and the displaying unit 240. For instance, the control unit 220 makes the communication unit 230 transmit the information generated by the operation entry unit 210. Moreover, the control unit 220 generates image information based on the display information which is provided by the information processing server 100 and makes the displaying unit 240 display an image by providing the image information to the displaying unit 240.

The control unit 220 can be implemented by, for example, an arithmetic processing unit configured with a CPU, ROM, and RAM, a control device, and so forth.

(Communication unit)

The communication unit 230 communicates with the information processing server 100. Specifically, the communication unit 230 transmits the provision request information generated by the operation entry unit 210 to the information processing server 100. Moreover, the communication unit 230 receives the display information from the information processing server 100. The information processing terminal 200 may receive the actual result information on the environment inside the greenhouse 3 and the weather information or transmit the equipment operation information by communicating with the measurement control device 300 or the weather information server 400.

The communication unit 230 is implemented by, for example, a communication interface for connection with a network or the like.

(Displaying unit)

The displaying unit 240 displays an image based on instructions given by the control unit 220. Specifically, the displaying unit 240 displays an information display screen and an operation entry screen based on the image information which is provided by the control unit 220.

The displaying unit 240 is implemented by a display device such as a display. Moreover, the functions of the operation entry unit 210 and the displaying unit 240 may be implemented by a touch panel or the like by being integrated into one unit.

(Measurement control device)

The measurement control device 300 is installed in the greenhouse 3 and has functions for measurement and control of the environment inside the greenhouse 3. Specifically, the measurement control device 300 acquires a signal from a sensor provided inside the greenhouse 3 and generates the actual result information on the environment inside the greenhouse 3. Moreover, the measurement control device 300 performs control of the environment control equipment provided in the greenhouse 3. Control of the environment control equipment here means control by which an operation target of the environment control equipment is adjusted. For instance, the measurement control device 300 includes a communication unit, a control unit, and a storing unit.

The communication unit communicates with the information processing server 100 or the information processing terminal 200. For example, the communication unit transmits the generated actual result information on the environment inside the greenhouse 3 to the information processing server 100 or the information processing terminal 200. The communication unit may perform transmission every time the actual result information is generated or perform transmission at predetermined time intervals. Moreover, the communication unit may transmit information other than the actual result information, for instance, the identification information for identification of the greenhouse 3 and the information on the environment control equipment. The communication unit is implemented by, for example, a communication interface for connection with a network or the like.

The control unit generates the actual result information on the environment inside the greenhouse 3 based on the signal generated by the sensor. Moreover, the control unit may perform control of the environment control equipment based on the prediction information on the environment inside the greenhouse 3, which is acquired from the information processing server 100, and the equipment operation information acquired from the information processing terminal 200. In control based on the prediction information, for example, feedback control to achieve an operation target value, which is automatically set in accordance with the prediction information, can be performed. In control based on the equipment operation information, feedback control to achieve an operation target value, which is entered by a caretaker of the greenhouse 3 based on the findings obtained from the prediction information on the environment inside the greenhouse 3, can be performed. The control unit can be implemented by, for example, an arithmetic processing unit configured with a CPU, ROM, and RAM, a control device, and so forth.

The storing unit stores the actual result information on the environment inside the greenhouse 3, which is generated by the control unit, the prediction information on the environment inside the greenhouse 3 or the equipment operation information, which is acquired via the communication unit, and so forth. The storing unit may store data itself represented by the signal generated by the sensor. The storing unit is implemented by, for example, a storage device for data storage or the like.

The sensor which is provided inside the greenhouse 3 is, for example, a sensor such as a temperature sensor, a humidity sensor, a solar radiation sensor, a carbon dioxide concentration sensor, or a soil water sensor. Moreover, an imaging sensor and a water content sensor, for example, may be provided as such a sensor. Furthermore, the measurement control device 300 may be installed inside the greenhouse 3 or may be installed outside the greenhouse 3. Moreover, the measurement control device 300 may be installed in a location different from the location of the greenhouse 3. In this case, the measurement control device 300 may perform control of the environment control equipment and acquisition processing, which is performed to acquire the signal generated by the sensor, by communication via a communication network or the like.

(Weather prediction server)

The weather information server 400 provides the weather information to an external device. Specifically, when a request for the weather information is made by the information processing server 100, the weather information server 400 transmits the requested weather information to the information processing server 100. For example, the weather information is information indicating the air temperature, the humidity, the amount of solar radiation, or the amount of rainfall. This weather information includes the weather observation information and the weather prediction information. The weather observation information is the actually observed present or past weather information. Moreover, the weather prediction information is the weather information that is predicted to be observed at a future point in time.

<2.2. Processing which is performed by the system>

Next, processing which is performed by the information processing system 1 will be described.

Processing which is performed by the information processing system 1 according to the present embodiment is classified as machine learning processing or prediction processing. Hereinafter, the flow of overall processing which is performed by the information processing system 1 and the flow of processing which is performed in the information processing server 100 in each of the machine learning processing and the prediction processing will be described.

(Machine learning processing)

Fig. 3 is a diagram conceptually showing an example of the flow of overall processing in the machine learning processing, which is performed by the information processing system 1 according to the embodiment of the present invention.

The measurement control device 300 transmits the actual result information on the environment inside the greenhouse 3 to the information processing server 100 (Step S501). Specifically, the measurement control device 300 transmits the actual result information on the environment inside the greenhouse 3, which is generated based on the signal obtained from the sensor, to the information processing server 100.

Moreover, the weather information server 400 transmits the weather observation information to the information processing server 100 (Step S502). Specifically, the weather information server 400 generates the weather observation information or acquires the weather observation information from another device. Then, the weather information server 400 transmits the weather observation information to the information processing server 100 in response to a request made by the information processing server 100 or on a regular basis.

The information processing server 100 performs machine learning for the greenhouse inside-environment prediction model by using the received information (Step S503). Specifically, the communication unit 110 makes the storing unit 120 store the actual result information on the environment inside the greenhouse 3, which is received from the measurement control device 300, and the weather observation information received from the weather information server 400. Then, the machine learning unit 131 performs machine learning for the greenhouse inside-environment prediction model by using these stored information.

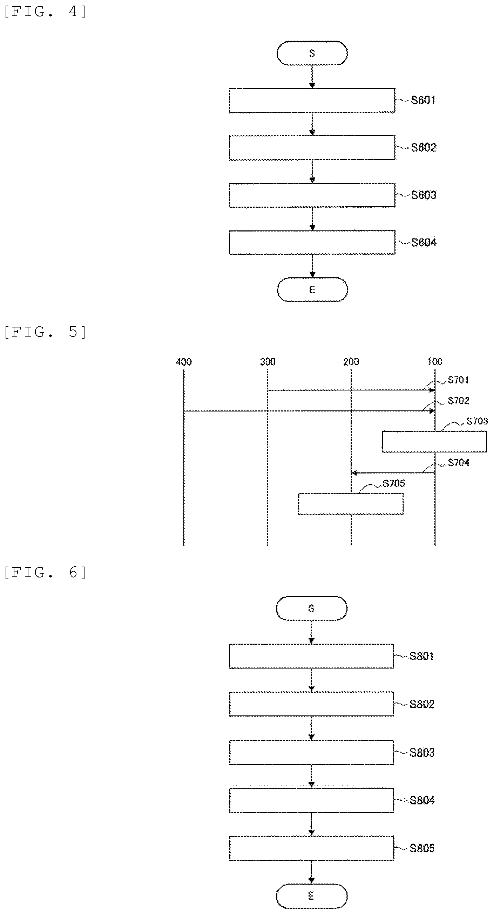

Next, the flow of the machine learning processing for the greenhouse inside-environment prediction model will be described. Fig. 4 is a flowchart conceptually showing an example of the machine learning processing which is performed by the information processing server 100 according to the embodiment of the present invention.

The information processing server 100 acquires the actual result information on the environment inside the greenhouse 3 and the weather observation information (Step S601). Specifically, the machine learning unit 131 acquires the actual result information on the environment inside the greenhouse 3 and the weather observation information, which are accumulated in the storing unit 120.

Moreover, the information processing server 100 acquires the existing greenhouse inside-environment prediction model (Step S602). Specifically, the machine learning unit 131 acquires the greenhouse inside-environment prediction model stored in the storing unit 120. This greenhouse inside-environment prediction model may be a greenhouse inside-environment prediction model that is already learned or not yet learned by the machine learning unit 131.

Next, the information processing server 100 updates the greenhouse inside-environment prediction model by using the actual result information on the environment inside the greenhouse 3 and the weather observation information (Step S603). Specifically, the machine learning unit 131 selects one of a plurality of machine learning models and performs machine learning for the greenhouse inside-environment prediction model by using the selected machine learning model and the actual result information on the environment inside the greenhouse 3 and the weather observation information corresponding to this actual result information.

In so doing, the machine learning unit 131 may perform machine learning for the greenhouse inside-environment prediction model by using, in addition to the weather observation information, the input information such as the information on a time at which observations of the weather are to be made, the identification information for identification of the greenhouse 3, or the information on the environment control equipment.

Moreover, the machine learning unit 131 may calculate the precision of the greenhouse inside-environment prediction model by inputting test input data to the new greenhouse inside-environment prediction model obtained by machine learning and comparing the output value with test output data.

Next, the information processing server 100 stores the updated greenhouse inside-environment prediction determination model (Step S604). Specifically, the machine learning unit 131 makes the storing unit 120 store the updated greenhouse inside-environment prediction determination model. When the precision of the greenhouse inside-environment prediction model is calculated in Step S603, the machine learning unit 131 may store the updated greenhouse inside-environment prediction determination model only if the calculated value is greater than or equal to a predetermined threshold value. Moreover, if the calculated value is smaller than the predetermined threshold value, greenhouse inside-environment prediction determination model update processing may be performed again.

(Prediction processing)

Fig. 5 is a diagram conceptually showing an example of the flow of overall processing in the prediction processing, which is performed by the information processing system 1 according to the embodiment of the present invention.

First, the information processing terminal 200 transmits the provision request information about a prediction about the environment inside the greenhouse 3 to the information processing server 100 (Step S701). Specifically, the communication unit 230 transmits, to the information processing server 100, the provision request information about the display information regarding a prediction about the environment inside the greenhouse 3 which is generated by the operation entry unit 210 based on the operation performed by the user. This provision request information includes information on the greenhouse 3 about which a prediction is to be made and a time (including a period) at which a prediction is to be made.

The weather information server 400 transmits the weather forecast information to the information processing server 100 (Step S702). Specifically, the weather information server 400 transmits the weather prediction information to the information processing server 100 in response to a request made by the information processing server 100. The information processing server 100 may acquire the weather prediction information from the weather information server 400 on a regular basis.

Next, the information processing server 100 makes a prediction about the environment inside the greenhouse 3 by using the greenhouse inside-environment prediction model (Step S703). Specifically, when the weather forecast information is received, the predicting unit 132 inputs the weather forecast information to the greenhouse inside-environment prediction model. The predicting unit 132 outputs the prediction results from the greenhouse inside-environment prediction model. Then, the predicting unit 132 generates the prediction information on the environment inside the greenhouse 3 based on the prediction results and makes the storing unit 120 store the prediction information. The details will be described later.

In the above-described case, it is assumed that, as the information which is input to the greenhouse inside-environment prediction model, in addition to the weather observation information, the information on a time at which observations of the weather are to be made, the identification information for identification of the greenhouse 3, the information on the environment control equipment, or the like is used. In this case, the predicting unit 132 may perform the prediction processing by using, in addition to the weather observation information, the information on a time at which a prediction about the weather is to be made, the identification information for identification of the greenhouse 3, the information on the environment control equipment, or the like. These information can be acquired as appropriate from the information processing server 100, the measurement control device 300, or the like.

The information processing server 100 transmits the display information to the information processing terminal 200 as a response to the received provision request information (Step S704). Specifically, when the provision request information is received by the communication unit 110 in Step S701, the output control unit 133 generates the display information from the prediction information on the environment inside the greenhouse 3 about which a prediction is to be made, which is stored in the storing unit 120. Then, the output control unit 133 makes the communication unit 110 transmit the generated display information to the information processing terminal 200.

The information processing terminal 200 displays the prediction information on the environment inside the greenhouse 3 based on the received display information (Step S705) . Specifically, the control unit 220 generates the image information from the display information received by the communication unit 230 and provides the generated image information to the displaying unit 240. The displaying unit 240 displays a prediction result screen about the environment inside the greenhouse 3 based on the provided image information.

Next, the flow of the machine learning processing for the greenhouse inside-environment prediction model will be described. Fig. 6 is a flowchart conceptually showing an example of the prediction processing which is performed by the information processing server according to the embodiment of the present invention.

The information processing server 100 sets the greenhouse 3 about which a prediction is to be made and a time at which a prediction is to be made (Step S801) . Specifically, the predicting unit 132 sets the greenhouse 3 about which a prediction about the weather is to be made and a time at which a prediction about the weather is to be made from the provision request information acquired from the information processing terminal 200.

Next, the information processing server 100 acquires the weather observation information at the designated time at which a prediction is to be made and the like (Step S802). Specifically, the predicting unit 132 acquires the weather observation information at the designated time at which a prediction is to be made and the other input information.

Then, the information processing server 100 acquires the greenhouse inside-environment prediction model (Step S803). Specifically, the predicting unit 132 acquires the greenhouse inside-environment prediction model stored in the storing unit 120.

Next, the information processing server 100 generates the prediction information on the environment inside the greenhouse 3 by using the greenhouse inside-environment prediction model (Step S804). Specifically, the predicting unit 132 inputs the weather observation information and the other input information to the greenhouse inside-environment prediction model. Then, the predicting unit 132 obtains the prediction results from this greenhouse inside-environment prediction model and generates the prediction information on the environment inside the greenhouse 3 based on the prediction results.

Then, the information processing server 100 stores the generated prediction information on the environment inside the greenhouse 3 (Step S805). Specifically, the predicting unit 132 makes the storing unit 120 store the generated prediction information.

<2.3. Brief summary>

As described above, according to the embodiment of the present invention, the information processing server 100 performs machine learning for the greenhouse inside-environment prediction model, to which the weather observation information is input, based on the actual result information on the environment inside the greenhouse 3. Then, the information processing server 100 outputs the prediction information on the environment inside the greenhouse 3 from the weather prediction information by using the greenhouse inside-environment prediction model which is obtained by this machine learning.

The above configuration makes it possible to predict the environment inside the greenhouse 3 by using only the weather prediction information such as a weather forecast. Therefore, it is possible to maintain the precision of the environment inside the greenhouse 3 while reducing costs. Moreover, by using, in addition to the weather prediction information, the information on a time at which a prediction is to be made (a time at which observations are to be made) and the information on the greenhouse, it is possible to improve the accuracy of a prediction about time series variations in the environment and therefore the environment inside the greenhouse 3.

Moreover, the above greenhouse inside-environment prediction model can be updated as appropriate, concurrently with the operation of the prediction processing which is performed by the information processing server 100, by feedback using the actual result information and the prediction information which are accumulated. Thus, the greenhouse inside-environment prediction model can be automatically improved without human intervention. As a result, it is possible to reduce the time and cost needed for an improvement of the model and improve the model based on quantitative data.

<<3. Hardware configuration example of the information processing server>>

The above is an explanation of the embodiment of the present invention. The above-described processing which is performed by the information processing server 100 is implemented by cooperation between software and hardware of the information processing server 100 which will be described below.

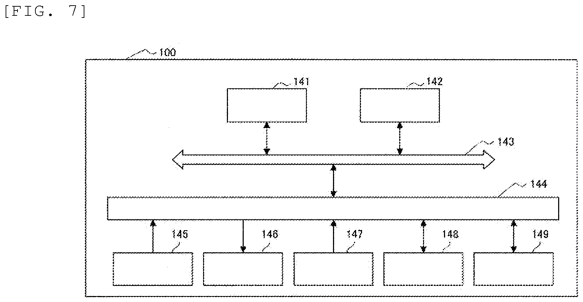

Fig. 7 is a block diagram depicting a hardware configuration example of the information processing server 100 according to the embodiment of the present invention. As depicted in Fig. 7, the information processing server 100 includes a processor 141, memory 142, an internal bus 143, an interface 144, an input device 145, an output device 146, a storage device 147, a connection port 148, and a communication module 149.

(Processor)

The processor 141 functions as an arithmetic processing unit and a control device and implements the functions of the control unit 130 (the machine learning unit 131, the disease-and-insect-pest-damage occurrence determining unit 132, the display information distribution control unit 133) in cooperation with various programs. The processor 141 makes the information processing server 100 perform various logical functions by executing the programs which are stored in the memory 142 or the other storage media such as the storage device 147 by using the control circuit. For example, the processor 141 can be a CPU or a graphics processing unit (GPU). The processor 141 may be a microprocessor.

(Memory)

The memory 142 stores a program, an operation parameter, and the like which are used by the processor 141. For instance, the memory 142 includes RAM and ROM and temporarily stores, for example, a program which is used in execution by the processor 141 or a parameter which changes as appropriate in execution by the processor 141. An external storage device may be used as part of the memory 142 via the connection port 148, the communication module 149, or the like.

The processor 141 and the memory 142 are connected to each other by the internal bus 143 including a CPU bus or the like. Moreover, the interface 144 connects the internal bus 143 with the input device 145, the output device 146, the storage device 147, the connection port 148, and the communication module 149.

(Input device)

The input device 145 includes an input means for inputting information and an input control circuit that generates an input signal based on input and outputs the input signal to the processor 141, and implements the function of an operation unit. For example, as the input means, there are a button, a switch, a lever, a microphone, and the like. As a result of the input device 145 being operated, various kinds of data are input to the information processing server 100 or a processing operation instruction is provided thereto.

(Output device)

The output device 146 outputs sound, light, or the like based on the output signal and implements the function of an output unit. For instance, the output device 146 includes sound output devices such as a speaker and headphones, a lamp using a light emitting diode (LED), and display devices such as a liquid crystal display (LCD) unit, an organic light emitting diode (OLED) device, and a projector.

(Storage device)

The storage device 147 is a device for data storage and implements the function of the storing unit 120. The storage device 147 may include a storage medium, a recording device that records data on the storage medium, a reading device that reads data from the storage medium, a deleting device that deletes data recorded on the storage medium, and the like. The storage device 147 stores a program which is executed by the processor 141 and various kinds of data.

(Connection port)

The connection port 148 is a port for directly connecting equipment to the information processing server 100. For example, the connection port 148 may be a universal serial bus (USB) port, an IEEE1394 port, an RS-232C port, a high-definition multimedia interface (HDMI®) port, or the like. By connecting external equipment to the connection port 148, data may be exchanged between the information processing server 100 and the external equipment.

(Communication module)

The communication module 149 is a communication device for connection to a network and implements the function of the communication unit 110. For example, the communication module 149 may be a wireless local area network (LAN)-ready communication device or a 3G or LTE-ready communication device. Moreover, the communication module 149 may be a wire communication-ready device that performs wire communication.

<<4. Conclusion>>

While the preferred embodiment of the present invention has been described in detail with reference to the accompanying drawings, the present invention is not limited to this example. It is clear that persons who have common knowledge in the technical field to which the present invention pertains could conceive of various changes or modifications within the scope of the technical idea described in the claims, and it should be understood that such changes or modifications would fall within the technical scope of the present invention.

For example, in the above-described embodiment, an example in which the information which is input to the greenhouse inside-environment prediction model is the weather prediction information, the identification information, and the information on the environment control equipment has been described; however, the present invention is not limited to this example. For instance, as the information which is input to the greenhouse inside-environment prediction model, information which is obtained from a sensor that is installed outside the greenhouse may be used. This sensor may be, for example, an environment sensor or the like, or the existing sensor may be used. The environment sensor may be, for example, a soil sensor, a rain gage, a thermometer, a hygrometer, or the like which is installed outside the greenhouse.

Moreover, the steps shown in the flowcharts of the above-described embodiment include, not only processing in which the steps are performed in chronological order in the order described therein, but also processing in which the steps are executed concurrently or individually, not necessarily in chronological order. Furthermore, it goes without saying that even the steps which are processed in chronological order can be processed in an appropriately changed order in some cases.

In addition, a computer program for making the hardware incorporated into the information processing server 100 perform the same function as each of the above-described functional configurations of the information processing server 100 can also be created. Moreover, a storage medium in which this computer program is stored is also provided.

Reference Signs List

1:       Information processing system
100:    Information processing server
110:    Communication unit
120:    Storing unit
130:    Control unit
131:    Machine learning unit
132:    Predicting unit
133:    Output control unit
200:    Information processing terminal
210:    Operation entry unit
220:    Control unit
230:    Communication unit
240:    Displaying unit
300:    Measurement control device
400:    Weather information server

**Claims**

**1.** An information processing device comprising:

a predicting unit that predicts an environment inside a greenhouse based on weather prediction information by using a greenhouse inside-environment prediction model which is obtained by machine learning that is performed based on actual result information on the environment inside the greenhouse by using weather observation information as input; and

an output control unit that controls output of prediction information on the predicted environment inside the greenhouse.

2. The information processing device according to claim 1, wherein
information which is input to the greenhouse inside-environment prediction model includes information on a time at which a prediction about weather is to be made.

3. The information processing device according to claim 2, wherein
the information on the time at which a prediction about the weather is to be made includes information on a time period to which the time at which a prediction about the weather is to be made belongs.

4. The information processing device according to claim 2 or 3, wherein
the information on the time at which a prediction about the weather is to be made includes information on a month to which the time at which a prediction about the weather is to be made belongs.

5. The information processing device according to any one of claims 1 to 4, wherein
information which is input to the greenhouse inside-environment prediction model includes identification information for identification of the greenhouse.

6. The information processing device according to any one of claims 1 to 5, wherein
information which is input to the greenhouse inside-environment prediction model includes information on environment control equipment that can control the environment inside the greenhouse.

7. The information processing device according to claim 6, wherein
the information on the environment control equipment includes information on presence or absence of installation of the environment control equipment.

8. The information processing device according to claim 6 or 7, wherein
the information on the environment control equipment includes information indicating operation conditions of the environment control equipment.

9. The information processing device according to any one of claims 1 to 8, wherein
the weather prediction information includes information on at least one of an air temperature outside the greenhouse, a relative humidity outside the greenhouse, an amount of solar radiation, and an amount of rainfall.

10. The information processing device according to any one of claims 1 to 9, further comprising:
a machine learning unit that performs machine learning for the greenhouse inside-environment prediction model based on the actual result information on the environment inside the greenhouse by using at least the weather observation information as input.

11. The information processing device according to claim 10, wherein
the machine learning unit updates the greenhouse inside-environment prediction model based on the prediction information on the environment inside the greenhouse and the actual result information on the environment inside the greenhouse at a time at which a prediction is to be made, which corresponds to the prediction information on the environment inside the greenhouse.

12. The information processing device according to any one of claims 1 to 11, wherein
the prediction information on the environment inside the greenhouse includes information on at least one of an air temperature inside the greenhouse and a relative humidity inside the greenhouse.

13. An information processing method comprising:

a prediction step of predicting an environment inside a greenhouse based on weather prediction information by using a greenhouse inside-environment prediction model which is obtained by machine learning that is performed based on actual result information on the environment inside the greenhouse by using weather observation information as input; and

an output control step of controlling output of prediction information on the predicted environment inside the greenhouse.

[FIG. 1]

[FIG. 2]

[FIG. 3]

[FIG. 4]

S

S601

S602

S603

S604

E

[FIG. 5]

400    300    200    100

S701

S702

S703

S704

S705

[FIG. 6]

S

S801

S802

S803

S804

S805

E

[FIG. 7]

## INTERNATIONAL SEARCH REPORT

| International application No. |
| --- |
| PCT/JP2018/008282 |

| A. CLASSIFICATION OF SUBJECT MATTER |
| --- |
| Int.Cl. F24F11/64(2018.01)i, A01G9/24(2006.01)i, A01G9/26(2006.01)i, G01W1/10(2006.01)i, G06Q50/02(2012.01)i |

According to International Patent Classification (IPC) or to both national classification and IPC

| B. FIELDS SEARCHED |
| --- |
| Minimum documentation searched (classification system followed by classification symbols) |
| Int.Cl. F24F11/64, A01G9/24, A01G9/26, G01W1/10, G06Q50/02 |

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>Y | JP 2002-005488 A (MITSUBISHI HEAVY INDUSTRIES, LTD.) 09 January 2002, claims, paragraphs [0001], [0010]-[0030], fig. 1-4 (Family: none) | 1-3, 5-13<br>4 |
| Y | JP 2004-000146 A (KITAOKAGUMI, LTD.) 08 January 2004, claim 30, paragraph [0001], fig. 1 (Family: none) | 4 |
| Y | WO 2014/184996 A1 (PANASONIC IP MANAGEMENT CO., LTD.) 20 November 2014, paragraphs [0121]-[0123], fig. 1-2 & US 2016/0066517 A1, paragraphs [0132]-[0134], fig. 1-2 & CN 105228441 A & CN 107439273 A | 4 |
| A | JP 2009-050174 A (KEIYOGAS CORPORATION) 12 March 2009, entire text, all drawings (Family: none) | 1-13 |
| A | WO 2014/030280 A1 (PANASONIC CORP.) 27 February 2014, entire text, all drawings & US 2015/0189840 A1 & CN 104427859 A | 1-13 |
| A | JP 2016-171750 A (NEC CORP.) 29 September 2016, entire text, all drawings (Family: none) | 1-13 |

| ☐ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 07 May 2018 (07.05.2018) | 15 May 2018 (15.05.2018) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012057931 A
- JP 2002048354 A
- JP 5227661 A